## Europäisches Patentamt

## European Patent Office

## Office européen des brevets

(19)

(11) Numéro de publication: **0 034 533**
**B1**

(12)

# FASCICULE DE BREVET EUROPEEN

(45) Date de publication du fascicule du brevet:
01.08.84

(51) Int. Cl.³: **F 25 B 15/02**, F 24 J 3/04

(21) Numéro de dépôt: 81400216.8

(22) Date de dépôt: 11.02.81

(54) **Procédé de production de froid et/ou de chaleur par cycle à absorption utilisable notamment pour le chauffage de locaux.**

(30) Priorité: 15.02.80 FR 8003460

(43) Date de publication de la demande:
26.08.81 Bulletin 81/34

(45) Mention de la délivrance du brevet:
01.08.84 Bulletin 84/31

(84) Etats contractants désignés:
BE DE GB IT NL SE

(56) Documents cités:
EP - A - 0 001 272
DE - A - 2 402 777
FR - A - 2 412 800
FR - A - 2 437 588
FR - A - 2 454 591
US - A - 2 392 894
US - A - 2 408 802
US - A - 3 402 570
US - A - 4 003 215
US - A - 4 031 712
US - A - 4 037 649

(73) Titulaire: **INSTITUT FRANCAIS DU PETROLE, 4, Avenue de Bois-Préau, F-92502 Rueil-Malmaison (FR)**

(72) Inventeur: **Rojey, Alexandre, 29-33, rue Henri Régnault, F-92380 Garches (FR)**
Inventeur: **Cohen, Georges, 1 bis, rue de Feucherolles, F-78240 Aigremont (FR)**

ACTORUM AG

## Description

L'invention concerne le domaine des machines frigorifiques à absorption.

Suivant le principe général connu des machines frigorifiques à absorption, il est possible de réaliser une pompe à chaleur à absorption qui produit, à un niveau de température d'utilisation moyen $T_2$, une quantité de chaleur $Q_2$ plus grande que la quantité de chaleur $Q_1$ qui lui a été fournie à un niveau de température moyen $T_1$ supérieur à $T_2$, en pompant de la chaleur à une source de chaleur à un niveau de température moyen $T_3$ inférieur à $T_2$, cette source de chaleur pouvant être par exemple l'eau d'une nappe phréatique ou l'air extérieur.

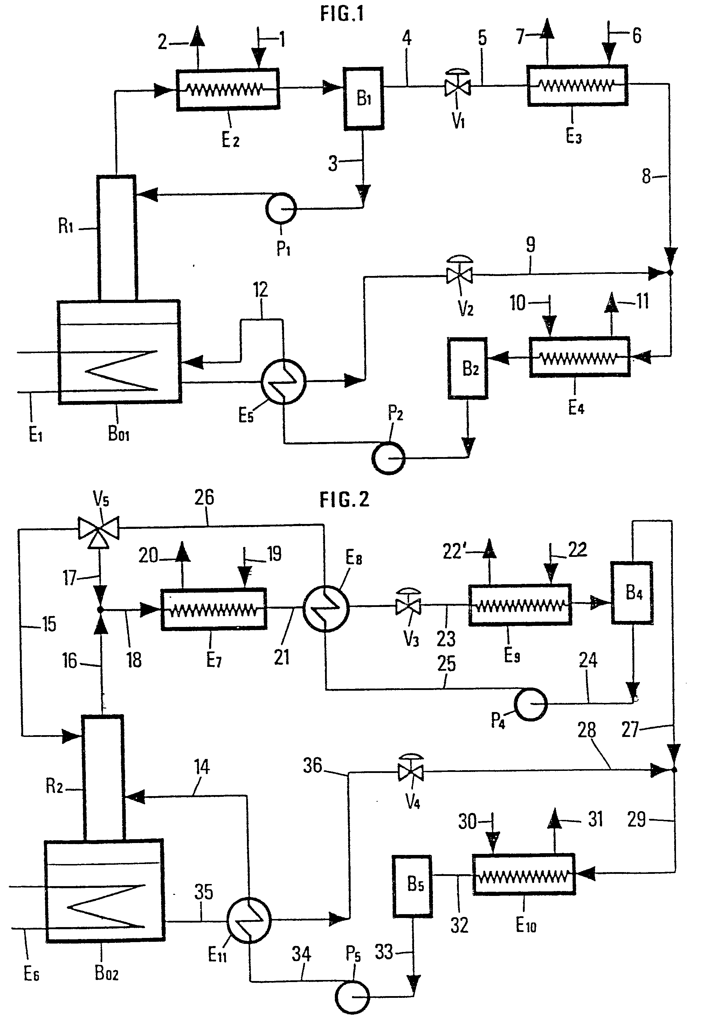

Une telle installation de type connu peut fonctionner suivant le schéma de principe qui est représenté sur la figure 1. Le cyle met en jeu un fluide de travail qui joue le rôle de soluté et qui est, par exemple, de l'ammoniac et un solvant qui est, par exemple, de l'eau.

Le fluide de travail est vaporisé par chauffage de la solution contenue dans le bouilleur BO1 avec apport de la quantité de chaleur $Q_1$ fournie par l'intermédiaire de l'échangeur $E_1$. La vapeur qui est formée contient généralement du solvant et elle est rectifiée par contact avec le reflux qui est envoyé en tête de la zone de rectification R1. La vapeur qui sort en tête de la zone de rectification R1 est ainsi formée de fluide frigorigène pratiquement pur. Cette vapeur est condensée dans l'échangeur E2 en chauffant un fluide extérieur qui arrive par le conduit 1 et repart par le conduit 2. Le condensat ainsi formé est recueilli dans le bac B1. Une fraction de ce condensat est évacuée par le conduit 3 et envoyée en tant que reflux par la pompe P1 en tête de la zone de rectification R1. La fraction restante est évacuée par le conduit 4, détendue dans la vanne de détente V1 et envoyée par le conduit 5 à l'échangeur E3. Dans l'échangeur E3 elle est vaporisée en pompant de la chaleur à un fluide extérieur qui arrive par le conduit 6 et repart par le conduit 7. La phase vapeur est évacuée par le conduit 8; elle est absorbée dans la solution pauvre provenant du bouilleur BO1 et arrivant par le conduit 9, à travers la vanne V2, en cédant de la chaleur ‹dans l'échangeur E4› à un fluide extérieur qui arrive par le conduit 10 et repart par le conduit 11. La solution riche ainsi formée est recueillie dans le bac B2 et reprise par la pompe P2 qui l'envoie par le conduit 12 au bouilleur BO1. La solution riche allant au bouilleur et la solution pauvre sortant du bouilleur échangent de la chaleur dans l'échangeur de chaleur E5.

Un tel schéma de fonctionnement est généralement satisfaisant lorsque l'installation fonctionne en produisant du froid et en rejetant de la chaleur dans les échangeurs E2 et E4 à une température relativement basse, par exemple 30 ou 40°C. Dans le cas où l'installation est utilisée en chauffage, le fluide de chauffage sera souvent de l'eau dont la température d'arrivée dans les échangeurs E2 et E4 évoluera généralement au cours de l'année. Lorsque la pompe à chaleur fournit la totalité ou tout au moins une grande partie de la chaleur nécessaire au chauffage, la température de sortie de l'eau pourra atteindre et dépasser des valeurs de l'ordre de 50°C. Dans ce cas, lorsque le fluide de travail est de l'ammoniac ou un fluide présentant une température d'ébullition et une température critique comparables, la pression à laquelle se trouvent le générateur et le condenseur E2 augmente rapidement lorsque la température de sortie du fluide chauffé croît. Par exemple, dans le cas de l'ammoniac, on observe les valeurs suivantes de la pression lorsque la température croît:

| t (°C) | 30 | 40 | 50 | 60 | 70 |
|---|---|---|---|---|---|
| P (atm) | 11,89 | 15,85 | 20,73 | 26,66 | 33,77 |

les valeurs relativement élevées de la pression qui sont atteintes lorsque la température dépasse 50°C représentent une difficulté importante dans la réalisation du dispositif et entrainent une augmentation du niveau de l'investissement.

Une variante de ce procédé connu consiste à ne vaporiser que partiellement le fluide de travail dans l'évaporateur $E_3$; la phase liquide résiduelle est alors renvoyée en totalité à la zone de désorption (US 2 392 894, 4 003 215 et FR 2 412 800). Cette variante ne remédie pas à l'inconvénient énoncé ci-dessus.

Il a été découvert qu'il est possible. Pour limiter le niveau de pression et accroître le coefficient de performance d'opérer selon un principe de fonctionnement qui est illustré par le schéma représenté sur la figure 2.

Le fluide caloporteur de travail (F) est vaporisé par chauffage de la solution contenue dans le bouilleur BO2, la chaleur nécessaire étant fournie par l'intermédiaire de l'échangeur E6. La vapeur qui est formée est rectifiée dans la colonne de rectification R2, par contact d'abord avec la solution riche arrivant de la zone d'absorption par le conduit 14, puis avec la solution envoyée en tête de la colonne de rectification R2 par le conduit 15. La vapeur sortant par le conduit 16 est mélangée avec la solution arrivant par le conduit 17. Le mélange liquide vapeur ainsi obtenu est envoyé par le conduit 18 dans l'échangeur E7 dans lequel la phase vapeur est condensée au moins en partie en cédant de la chaleur à un fluide externe qui arrive par le conduit 19 et repart par le conduit 20. La solution obtenue ressort de l'échangeur E7 par le conduit 21, saturée ou légèrement sous refroidie. Pour une température donnée, plus la teneur en eau de cette solution est élevée, plus la pression est basse. Ainsi par exemple pour une température de 60°C, la pression de saturation évolue de la manière suivante avec la concentration en ammoniac x exprimée en faction poids d'ammoniac.

| x % | 100 | 75 | 61 | 51 |
|---|---|---|---|---|
| P (atm) | 26,7 | 19,4 | 13,6 | 9,7 |

C'est un des objets de la présente invention que d'abaisser la pression de fonctionnement afin d'abaisser les frais de fonctionnement ainsi que réduire les problèmes de sécurité; dans le procédé selon l'invention, on réduit cette pression de fonctionnement en condensant la vapeur qui sort de la zone de rectification après l'avoir mélangée avec une solution moins concentrée en fluide de travail (F). Le fait d'obtenir à la sortie du condenseur une solution au lieu d'un constituant pratiquement pur pose toutefois un certain nombre de problèmes. En particulier, lorsque cette solution est détendue dans la vanne V3 et vaporisée dans l'échangeur E9 en prélevant de la chaleur sur un fluide extérieur qui arrive par le conduit 22 et repart par le conduit 22', la température de vaporisation n'est pas constante et pour vaporiser entièrement la solution, il est généralement nécessaire de débuter la vaporisation à une température très basse, ce qui entraine une pression très basse et une réduction des performances du procédé. Dans le procédé selon l'invention, la solution, qui entre par le conduit 23 dans l'échangeur E9, n'est vaporisée que partiellement en échangeant de la chaleur avec le fluide extérieur qui arrive par le conduit 22 et repart par le conduit 22'. Le mélange liquide vapeur ainsi obtenu est recueilli dans le bac de décantation B4. La phase vapeur est évacuée par le conduit 27. La phase liquide est évacuée par le conduit 24 et reprise par la pompe P4 qui l'envoie dans le conduit 25. Dans le mode de réalisation préféré qui est représenté sur la figure 2, elle échange de la chaleur dans l'échangeur E8 avec la solution sortant de l'échangeur E7 et ressort de l'échangeur E8 par le conduit 26.

Si on distingue deux zones, une première zone comprenant les échangeurs E7, E8 et E9 ainsi que l'ensemble du circuit constitué par les lignes 18, 21, 23, 24, 25, 26, la vanne de détente V3 et le bac de décantation B4 et une deuxième zone formée par le reste du dispositif, il est clair que pour qu'un régime permanent puisse s'établir, il faut que les quantitées de solvant (S) et de fluide frigorigène (F) entrant dans la première zone et sortant de la deuxième zone soient les mêmes que les quantités de solvant et de fluide frigorigène sortant de la première zone et entrant dans la deuxième zone. La température de sortie de l'échangeur E9 étant généralement beaucoup plus basse que la température de la vapeur sortant par le conduit 16, la teneur en solvant de la vapeur sortant par le conduit 16 est supérieure à la teneur en solvant de la vapeur sortant du bac B4. Dans ces conditions, pour qu'un régime permanent puisse s'établir, il faut nécessairement transférer de la première zone à la deuxième zone une phase plus riche en solvant que la vapeur sortant de la deuxième zone par le conduit 16. Dans le procédé selon l'invention, ceci est réalisé en divisant la solution qui arrive par le conduit 26 en deux fractions au moyen de la vanne distributrice V5. Une première fraction est envoyée par le conduit 17 pour être mélangée avec la vapeur sortant par le conduit 16. Le mélange liquide- vapeur ainsi formé est envoyé par le conduit 18 dans l'échangeur E7 comme décrit ci-dessus. La fraction restante de solution est envoyée par le conduit 15 à la colonne de rectification R2.

Comme cette fraction de solution est formée à une pression voisine de la pression existant dans la zone d'absorption et que sa température de saturation à cette pression est inférieure à la température de saturation de la solution sortant de la zone d'absorption, elle est plus concentrée en soluté (F) que la solution provenant de la zone d'absorption.

Pour cette raison, dans le procédé selon l'invention, elle est envoyée en tête de la zone de rectification, ce qui permet d'obtenir à la sortie de la zone de rectification une phase vapeur qui est enrichie en soluté (F) et appauvrie en solvant (S), en diminuant ainsi la chaleur qu'il est nécessaire de fournir au bouilleur, ladite vapeur étant évacuée par le conduit 16.

La vapeur qui est évacuée par le conduit 27 mélangée avec la solution pauvre arrivant par le conduit 28 et le mélange liquide-vapeur ainsi formé est envoyé par le conduit 29 dans l'échangeur E10. La phase vapeur est alors absorbée en cédant de la chaleur à un fluide extérieur qui arrive par le conduit 30 et ressort par le conduit 31. La solution riche ainsi formée ressort de l'échangeur E10 par le conduit 32 et elle est recueillie dans le bac B5, d'où elle est évacuée par le conduit 33 pour être reprise par la pompe P5, qui l'envoie par le conduit 34 à lè'échangeur E11. Dans l'échangeur E11, elle échange de la chaleur avec la solution peuvre qui est évacuée par le conduit 35 du bouilleur B02, refroidie dans l'échangeur E11, évacuée de l'échangeur E11 par le conduit 36, détendue dans la vanne de détente V4 et recyclée à la zone d'absorption par le conduit 28.

L'invention peut être définie comme suit:

Procédé de production de froid et/ou de chaleur, selon un cycle à absorption mettant en jeu un fluide de travail (F), jouant le rôle de soluté, et un fluide (S), jouant le rôle de solvant, la température d'ébullition du fluide (S) étant supérieure à la température d'ébullition du fluide (F), ledit cycle comportant au moins une étape d'absorption, au moins une étape de désorption, au moins une étape de rectification de la vapeur provenant de l'étape de désorption, au moins une étape de condensation et au moins une étape de vaporisation, comprenant les étapes suivantes:

a) on vaporise partiellement, à l'étape de vaporisation, la phase liquide ($L_1$), riche en fluide (F), obtenue à l'étape de condensation, en prélevant la chaleur de vaporisation nécessaire au moins en partie sur un fluide extérieur, on recueille une phase vapeur ($V_1$) et une phase liquide ($L_2$), on sépare ladite phase vapeur ($V_1$) de ladite phase liquide ($L_2$) et on fractionne la phase liquide ($L_2$) en au moins une première fraction et au moins une seconde fraction,

b) on met en contact, à l'étape d'absorption, la phase vapeur ($V_1$) provenant de l'étape (a) avec une phase liquide ($L_3$) pauvre en fluide (F) et riche en fluide (S), provenant de l'étape de désorption, on cède de la chaleur à un fluide extérieur et on recueille une solution ($S_1$) enrichie en fluide (F),

c) on introduit au moins une fraction de la solution ($S_1$) provenant de l'étape (b) en un point intermédiaire d'une zone de rectification où s'effectue l'étape de rectification, on laisse s'écouler ladite fraction de la solution ($S_1$) dans ladite zone de rectification, on fournit de la chaleur au bas de ladite rectification au moyen d'un fluide de chauffage, de manière à réaliser l'étape de désorption de ladite solution ($S_1$) et former une phase vapeur ($V_2$) et une phase liquide désorbée (L3), on décharge ladite phase liquide (L3) et on l'envoie à l'étape (b), on introduit ladite première fraction de la phase liquide ($L_2$), provenant de l'étape (a) en un point supérieur de la zone de rectification et on la laisse s'écouler dans ladite zone de rectification, on fait circuler la phase vapeur (V2) de bas en haut dans la zone de rectification, et l'on décharge une phase vapeur (V3) en tête de la zone de rectification, et

d) on mélange la phase vapeur V3, déchargée de la tête de la zone de rectification, avec ladite seconde fraction de la phase liquide (L2) provenant de l'étape (a), on refroidit le mélange résultant par échange de chaleur avec un fluide extérieur, à l'étape de condensation, formant ainsi la phase liquide condensée (L1), et on envoie ladite phase (L1) à l'étape (a).

La solution provenant de l'étape d'absorption peut être introduite en différents points de la zone de rectification. Il est possible notamment de l'introduire entièrement en un point intermédiaire de la zone de rectification, la solution provenant de l'étape de vaporisation étant envoyée en tête. On peut toutefois (bien que ce soit moins préféré) n'introduire qu'une partie (50 à 100%) de la solution d'adsorption en un point intermédiaire de la zone de rectification et introduire le reste en un autre point, par exemple en tête ou en fond ou directement à l'étape de désorption.

L'invention concerne également le cas où l'on utiliserait deux colonnes distinctes, mais reliées ensemble, l'une correspondant à la partie supérieure de la colonne unique mentionnée plus haut (zone située au-dessus du point intermédiaire défini plus haut) et l'autre à la partie inférieure (au-dessous du point intermédiaire).

La chaleur qui est fournie au cours de l'étape de désorption peut avoir une origine quelconque. Elle peut provenir notamment de la combustion d'un hydrocarbure gazeux ou liquide, tel que le gaz naturel ou un fuel utilisé pour le chauffage domestique, ou encore pour les installations de grande puissance, un fuel industriel. La chaleur peut être transmise directement par les gaz de combustion à travers une surface d'échange ou par l'intermédiaire d'un fluide caloporteur tel que par exemple l'eau pressurisée ou encore un fluide caloporteur organique.

Pour épuiser plus complètement en chaleur le fluide qui fournit la chaleur nécessaire à l'étape de désorption, on peut opérer selon la disposition prévue dans le FR-A-2454591 consistant à diviser la solution provenant de l'étape d'absorption en deux fractions dont une fraction est envoyée en un point intermédiaire de la zone de rectification et dont la fraction restante se vaporise partiellement en échangeant de la chaleur de préférence à contre-courant avec le fluide extérieur de chauffage après que ce fluide ait fourni de la chaleur au bouilleur. Le mélange liquide-vapeur ainsi obtenu par vaporisation partielle de ladite fraction restante est alors envoyé à la base de la zone de rectification, la phase vapeur étant mélangée avec la phase vapeur provenant du bouilleur et la phase liquide étant recueillie dans le bouilleur avec la phase liquide ayant contacté la phase vapeur dans la zone de rectification.

Il est également possible, en particulier lorsque la quantité de chaleur ainsi récupérée est relativement faible en comparaison de la chaleur fournie au bouilleur, d'envoye toute la solution provenant de l'étape d'absorption à la zone de rectification, après avoir refroidi le fluide extérieur de chauffage du désorbeur (après son passage dans ledit désorbeur) par échange de chaleur avec ladite solution en provoquant éventuellement un début de vaporisation de ladite solution.

Il faut toutefois éviter une vaporisation trop importante provoquant un entraînement excessif de solvant (S) qui conduit à une diminution des performances du procédé.

Le procédé fournit de la chaleur à un fluide extérieur dans les échangeurs E7 et E10 et prélève de la chaleur à un fluide extérieur dans l'échangeur E9. Au ocurs de ces échanges de chaleur, la température du mélange des fluides (F) et (S) évolue ainsi qu'en général la température des fluids extérieurs. Il est donc avantageux d'opérer ces échanges à contre-courant, le mélange des fluides (F) et (S) suivant au cours de l'étape de condensation et de l'étape d'absorption une évolution de température décroissante parallèle à l'évolution de température croissante du fluide extérieur et au cours de l'étape de vaporisation une évolution de température croissante parallèle à l'évolution de température décroissante du fluide extérieur.

L'invention s'applique tout particulièrement au cas où le fluide (F) est de l'ammoniac et le fluide (S) de l'eau. Toutefois d'autres fluides peuvent être également utilisés purs ou en mélange.

Le fluide (F) peut être, par exemple, un hydrocarbure dont la molécule comporte de 3 à 5 atomes de carbone, tel que le propane, le butane normal, l'isobutane, le pentane normal, l'isopentane, ou un hydrocarbure halogéné du type «Fréon» dont la molécule comporte un ou deux atomes de carbone et au moins un atome de fluor, par exemple le difluorochlorométhane (R-22), le dichlorofluorométhane (R-21) ou le difluorodichlorométhane (R-12). Le solvant peut être alors par exemple la diméthylformamide, la diethylformamide, l'éthylène glycol, le diéthylène glycol, le triéthylène glycol, le diméthyléther du tétraéthylene glycol, le dibutylphtalate, le diméthylsulfoxyde, la N-méthylpyrrolidone, la N,N-diméthylacétamide, l'acétate d'isobutyle, l'alcool benzylique, l'aniline ou encore un hydrocarbure choisi par exemple parmi les hydrocarbures paraffiniques.

Le fluide (F) peut être également, par exemple, de la méthylamine et le fluide (S) de l'eau.

De manière générale tout couple fluide de travail (F), solvant (S) peut convenir à condition que les produits utilisés soient stables chimiquement dans les conditions de température et de pression auxquelles on opère, que le fluide de travail et le solvant puissent être vaporisés purs ou en mélange dans les conditions de température et de pression auxquelles on opère, la volatilité du fluide de travail étant toutefois supérieure à la volatilité du solvant.

Les caractéristiques du procédé apparaissent dans les exemples suivants présentés à titre d'illustration.

Exemple 1

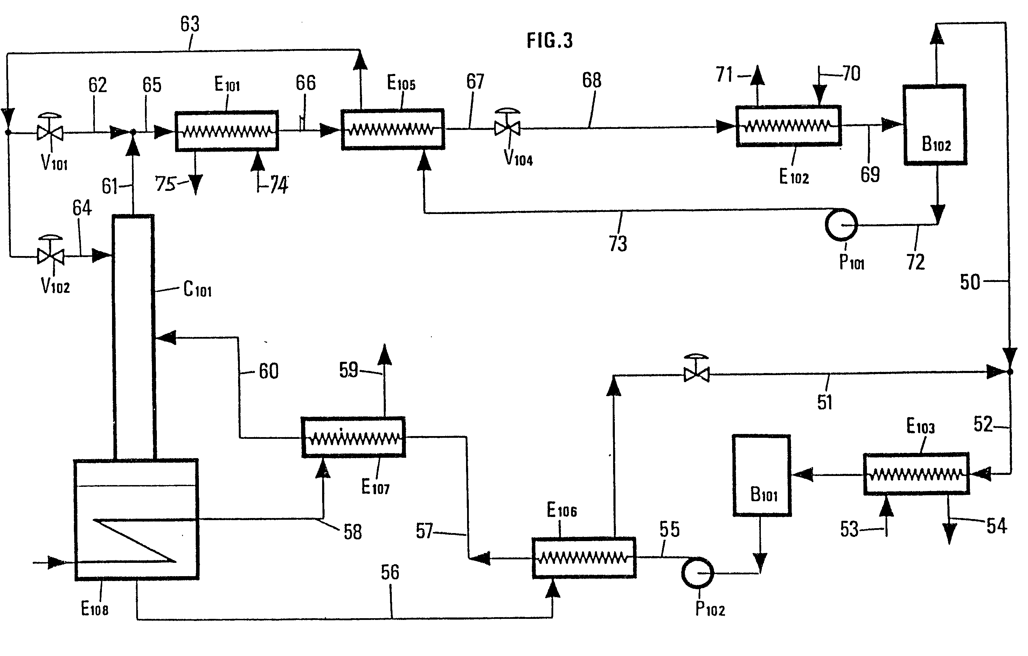

L'exemple est illustré par la figure 3.

On réalise l'étape d'absorption en mettant en contact une solution provenant de l'étape de désorption et qui arrive par le conduit 51 avec une phase vapeur qui provient de l'étape d'évaporation et qui arrive par le conduit 50.

Le mélange qui arrive par le conduit 51 a la composition suivante (en fractions molaires):

$NH_3$ : 8%
$H_2O$ : 92%

La phase vapeur qui arrive par le conduit 50 contient 99,96% d'ammoniac. Le débit de phase vapeur est de 72,1 kg/h et le débit de solution de 224,4 kg/h. Le mélange liquide-vapeur est envoyé par le conduit 52 à l'échangeur E103 et l'étape d'absorption est effectuée en cédant la chaleur d'absorption à l'eau d'un circuit de chauffage qui arrive par le conduit 53 à 40°C et repart par le conduit 54 à 55°C. La solution obtenue est recueillie dans le bac B101 et reprise par la pompe P102 qui l'envoie par le conduit 55 dans l'échangeur E106. Dans l'échangeur E106 elle est réchauffée en échangeant de la chaleur avec la solution pauvre arrivant par le conduit 56. Elle ressort de l'échangeur E106 par le conduit 57 à une température de 125°C. Elle est alors envoyée dans l'échangeur E107 dans lequel elle est réchauffée à contre-courant en refroidissant les fumées qui arrivent par le conduit 58 et ressortent par le conduit 59 et elle ressort de l'échangeur E107 par le conduit 60 pour être envoyée dans la colonne C101. La colonne comporte 8 plateaux et la solution est envoyée sur le 4ème plateau. La pression en tête est de 15,9 atm.

La colonne est équipée d'un bouilleur qui est réchauffé par les fumées d'un brûleur fonctionnant avec du gaz naturel, à travers la surface d'échange E108. La chaleur ainsi fournie au bouilleur est de 40 636 Kcal/h. Les fumées ressortent du bouilleur par le conduit 58 à une température de 280°C. Elles sont alors envoyées dans l'échangeur E107 d'où elles ressortent par le conduit 59 à une température de 180°C.

La vapeur sortant en tête de la colonne de rectification est évacuée par le conduit 61. Par le conduit 62 arrive un débit de 16,8 kg/h de solution. Cette dernière solution provient du passage, à travers la vanne de répartition V101, d'une fraction de la solution qui arrive par le conduit 63. Le fraction restante de la solution qui arrive par le conduit 63 passe à travers la vanne de répartition V102 et elle est envoyée par le conduit 64 en tête de la colonne C101. Le mélange liquide-vapeur obtenu après mélange de la vapeur de tête avec l'appoint arrivant par le conduit 62 est envoyé par le conduit 65 à l'échangeur E101 d'où il ressort par le conduit 66. La chaleur de condensation, qui représente 28 934 Kcal/h, est fournie à contre-courant à l'eau d'un circuit de chauffage qui arrive par le conduit 74 à une température de 40°C et ressort par le conduit 75 à une température de 55°C. La solution résultante est envoyée par le conduit 66 à l'échangeur E105 d'où elle ressort par le conduit 67. Elle est détendue à travers la vanne de détente V104 puis envoyée par le conduit 68 à l'échangeur E102 d'où elle ressort par le conduit 69. La chaleur de vaporisation est prélevée à contre-courant sur l'eau d'une nappe phréatique qui arrive par le conduit 70 à 12°C et repart par le conduit 71 à 4°C. Le mélange liquide-vapeur sortant de l'échangeur E102 est recueilli dans le bac B102 où la phase liquide et la phase vapeur sont séparées.

La phase liquide est évacuée par le conduit 72 et envoyée par la pompe P101 dans le conduit 73 par lequel elle entre dans l'échangeur E105 d'où elle ressort par le conduit 63 à une température de 40°C. La phase vapeur est recyclée par le conduit 50 à l'étape d'absorption.

Exemple 2

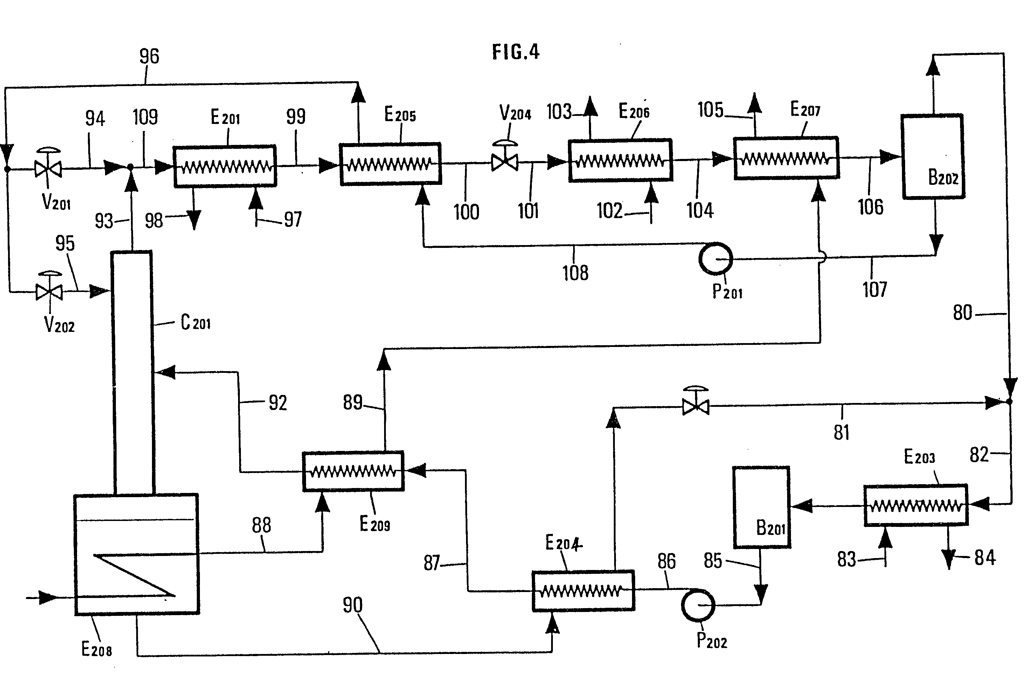

L'exemple est illustré par la figure 4. On réalise l'étape d'absorption en mettant en contact une solution provenant de l'étape de désorption et qui arrive par le conduit 81 avec une phase vapeur qui provient de l'étape d'évaporation et qui arrive par le conduit 80. Le mélange eau-ammoniac qui arrive par le conduit 81 contient 5% d'ammoniac (en fraction molaire). Le mélange liquide-vapeur ainsi obtenu est envoyé par le conduit 82 dans l'échangeur E203 et l'étape d'absorption est effectuée en cédant la chaleur d'absorption à l'eau d'un circuit de chauffage qui arrive par le conduit 83 à 26°C et repart par le conduit 84 à 32°C. La solution obtenue, qui représente un débit de 202,6 kg/h est recueillie dans le bac B201. Elle est évacuée par le conduit 85 et pompée par la pompe P202 qui l'envoie par le conduit 86 dans l'échangeur E204 dans lequel elle échange de la chaleur avec la solution pauvre provenant du bouilleur par le conduit 90 et ressort de l'échangeur E204 par la conduite 87 à la température de 94°C. Elle est alors envoyée dans l'échangeur E209 dans lequel elle échange de la chaleur avec les fumées qui arrivent par le conduit 88 et repartent par le conduit 89. Elle est introduite partiellement vaporisée, par le conduit 92, sur le 4ème plateau de la colonne C201 qui comporte 8 plateaux. La pression en tête de la colonne est de 8,6 atm. La colonne est équipée d'un bouilleur qui est réchauffé par les fumées provenant d'un brûleur fonctionnant avec du gaz naturel. La chaleur ainsi transmise au bouilleur qui représente 31 991 Kcal/h est transférée à travers la surface d'échange E208.

La vapeur sortant en tête de la colonne C201 est évacuée par le conduit 93. Elle est mélangée avec un débit de 89,6 kg/h de solution arrivant par le conduit 94 après passage à travers la vanne de répartition V201. La fraction restante de la solution qui arrive par le conduit 96 passe par la vanne de répartition V202 et est introduite par le conduit 95 en tête de la colonne C201. Le mélange liquide-vapeur obtenu après mélange de la vapeur recueillie en tête de la colonne C201 avec l'appoint liquide arrivant par le conduit 109 dans l'échangeur E201 dans lequel il est condensé en fournissant 23 142 Kcal/h à l'eau d'un circuit de chauffage qui arrive par le conduit 97 à 26°C et ressort par le conduit 98 à 32°C. La solution ainsi obtenue est envoyée par le conduit 99 à l'échangeur E205 d'où elle ressort par le conduit 100. Elle est alors détendue à travers la vanne de détente V204 et elle est envoyée par le conduit 101 à l'échangeur E206 dans lequel elle est partiellement vaporisée en échangeant de la chaleur avec de l'air extérieur qui arrive par le conduit 102 à 10°C et repart par le conduit 103 à 5°C. L'humidité relative de l'air étant de 50% il n'y a pas condensation d'eau provenant de cet air extérieur et aucun dégivrage n'est nécessaire dans ces conditions de fonctionnement. Le mélange liquide vapeur sortant de l'échangeur E206 est envoyé par le conduit 104 dans l'échangeur E207 dans lequel la vaporisation du mélange eau-ammoniac est poursuivie par échange de chaleur avec les fumées provenant de l'échangeur E209 qui arrivent par le conduit 89 et repartent par le conduit 105. Le mélange liquide vapeur obtenu ressort de l'échangeur E207 par le conduit 106 à une température de 15°C et il est recueilli dans le bac B202. Dans le bac 202 on sépare la phase liquide et la phase vapeur. La phase liquide est évacuée par le conduit 107, pompée par la pompe P201 et envoyée par le conduit 108 à l'échangeur E205. La phase vapeur est évacuée par le conduit 80 et recyclée à l'étape d'absorption.

Exemple 3

Les exemples comparatifs de fonctionnement selon l'agencement représenté sur la figure 3 montrent l'influence de la position de l'introduction de l'alimentation de la colonne C101 sur le coefficient de performance du système. La puissance fournie par le procédé selon l'invention aux échangeurs E101 et E103 est de 100 kilowatt; elle permet de réchauffer l'eau d'un circuit de chauffage de 45 à 60°C. La source froide utilisée est l'eau d'une nappe phréatique disponible à 12°C et que l'on rejette à 6°C après avoir prélevé cette chaleur dans l'évaporateur E102. La colonne C101 comporte 7 plateaux.

a) dans le premier cas de fonctionnement, le conduit 60 est réuni au conduit 64 pour introduire la solution ammoniacale à épurer dans la colonne C101 au-dessus du premier étage (les étages sont comptés à partir du haut).

b) dans le second cas (selon l'invention), on introduit la charge liquide (ligne 60) au-dessus du troisième plateau de la colonne et le reflux (ligne 64) au-dessus du premier.

Les résultats principaux des deux modes de réalisation sont réunis dans le tableau ci-dessous, le coefficient de performance étant rapporté à la puissance fournie au rebouilleur (E108) de la colonne et à l'échangeur E107.

| Etage d'alimentation en charge liquide | Débit d'alimentation | Puissance | | Coefficient de performance |
| --- | --- | --- | --- | --- |
| | | Rebouilleur | Evaporateur | |
| 1 | 415 kg/h | 70,0 kw | 27,6 kw | 1,45 |
| 3 | 409 kg/h | 66,2 kw | 29,2 kw | 1,50 |

Cet exemple montre qu'il est avantageux d'introduire la charge en un point intermédiaire de la colonne et le reflux en tête.

Ces exemples sont donnés à titre d'illustration et d'autres cas d'utilisation du procédé peuvent être prévus. Par exemple, le fluide du circuit de chauffage auquel est transmise la chaleur au cours des étapes de condensation et d'absorption peut être également de l'air. Si le local à chauffer fait l'objet d'une ventilation d'air contrôlée, la chaleur peut être transmise à l'air extérieur qui est chauffé avant d'être envoyé dans le local à chauffer. Elle peut être également transmise à l'air intérieur du local qui est réchauffé et qui est dans ce cas recirculé, ou encore à un mélange d'air extérieur et d'air intérieur.

Le fluide qui circule dans le circuit de chauffage peut alimenter les échangeurs dans lesquels est transmise la chaleur fournie par le procédé au cours des étapes de condensation ou d'absorption, soit en parallèle, soit en série.

Les différentes étapes du procédé peuvent être réalisées avec différents types de matériel.

La colonne de rectification peut être réalisée avec des plateaux par exemple à calottes ou à clapets, soit encore en utilisant différents types de garnissage, soit en éléments distincts de dimension inférieure au diamètre de la colonne (tels que par exemple les anneaux Raschig, les anneaux Pall, les selles de Berl utilisés en génie chimique) soit en éléments tissés (tels que par exemple les garnissages «Multiknit» fabriqués par Tissmétal).

Les échangeurs peuvent être par exemple des échangeurs à plaques, par exemple des échangeurs en aluminium brasé, ou encore des échangeurs à double tube.

Les mélanges effectués entre une phase gazeuse et une phase liquide peuvent être réalisés soit par simple mélange en ligne, soit dans une enceinte comportant une agitation soit mécanique soit statique, le mélange résultant dans ce dernier cas du passage des phases dont on effectue le mélange, par exemple, autour d'une hélice ou à travers un garnissage. Lesdits mélanges et la fourniture de chaleur par condensation au moins partielle desdits mélanges peuvent être opérés soit successivement, la zone de mélange étant distincte de l'échangeur dans lequel la chaleur est fournie à l'extérieur, soit simultanément en refroidissant l'enceinte dans laquelle est effectué le mélange.

La pression dans la zone de désorption est gé-·néralement comprise entre 3 et 25 bars et la pression dans la zone d'absorption est généralement comprise entre 1 et 15 bars.

La température du mélange des fluides (F) et (S) à l'issue des étapes de condensation et d'absorption est généralement comprise entre 20 et 100°C et la température du mélange au cours de l'étape de vaporisation est généralement comprise entre $-15$ et 50°C.

Le présent procédé peut trouver des applications autres que celles du chauffage des locaux. En effet l'étape d'évaporation, qui dans le cas du fonctionnement en pompe à chaleur sert à prélever de la chaleur en vue d'en fournir au cours des étapes de condensation et d'absorption, peut être également utilisée pour produire du froid, la chaleur cédée au cours des étapes d'absorption et de condensation étant alors soit utilisée comme moyen de chauffage soit rejetée dans le milieu ambiant.

## Revendications

1. Procédé de production de froid et/ou de chaleur, selon un cycle à absorption mettant en jeu un fluide de travail (F), jouant le rôle de soluté, et un fluide (S), jouant le rôle de solvant, la température d'ébullition du fluide (S) étant supérieure à la température d'ébullition du fluide (F), ledit cycle comportant au moins une étape d'absorption, au moins une étape de désorption, au moins une étape de rectification de la vapeur provenant de l'étape de désorption, au moins une étape de condensation et au moins une étape de vaporisation, comprenant les étapes suivantes:
a) on vaporise partiellement, à l'étape de vaporisation, la phase liquide $(L_1)$, riche en fluide (F), obtenue à l'étape de condensation, en prélevant la chaleur de vaporisation nécessaire au moins en partie sur un fluide extérieur, on recueille une phase vapeur $(V_1)$ et une phase liquide $(L_2)$, on sépare ladite phase vapeur $(V_1)$ de ladite phase liquide $(L_2)$, et on fractionne la phase liquide $(L_2)$ en au moins une première fraction et au moins une seconde fraction,
b) on met en contact, à l'étape d'absorption, la phase vapeur $(V_1)$ provenant de l'étape (a) avec une phase liquide $(L_3)$ pauvre en fluide (F) et riche en fluide (S), provenant de l'étape de désorption, on cède de la chaleur à un fluide extérieur et on recueille une solution $(S_1)$ enrichie en fluide (F),
c) on introduit au moins une fraction de la solution $(S_1)$ provenant de l'étape (b) en un point intermédiaire d'une zone de rectification où s'effectue l'étape de rectification, on laisse s'écouler ladite fraction de la solution $(S_1)$ dans ladite zone de rectification, on fournit de la chaleur au bas de ladite zone de rectification au moyen d'un fluide de chauffage, de manière à réaliser l'étape de désorption de ladite solution $(S_1)$ et former une phase vapeur $(V_2)$ et une phase liquide désorbée (L3), on décharge ladite phase liquide (L3), et on l'envoie à l'étape (b), on introduit ladite première fraction de la phase liquide (L2), provenant de l'étape (a) en un point supérieur de la zone de rectification, et on la laisse s'écouler dans ladite zone de rectification, on fait circuler la phase vapeur (V2) de bas en haut dans la zone de rectification, et l'on décharge une phase vapeur (V3) en tête de la zone de rectification, et
d) on mélange la phase vapeur V3, déchargée de la tête de la zone de rectification, avec ladite seconde fraction de la phase liquide (L2) provenant de l'étape (a), on refroidit le mélange·résultant par échange de chaleur avec un fluide extérieur, à l'étape de condensation, formant ainsi la phase liquide condensée (L1), et on envoie ladite phase (L1) à l'étape (a).

2. Procédé selon la revendication 1, dans lequel on échange la chaleur au cours des étapes de condensation, d'absorption et de vaporisation suivant un mode d'échange à contre-courant, le mélange des fluides (F) et (S) suivant, au cours de l'étape de condensation et de l'étape d'absorption, une évolution de température décroissante parallèle à l'évolution de température croissante du fluide extérieur et, au cours de l'étape de vaporisation, une évolution de température croissante parallèle à l'évolution de température décroissante du fluide extérieur.

3. Procédé selon l'une quelconque des revendications 1 et 2, dans lequel on fait passer le fluide de chauffage fournissant la chaleur nécessaire à l'étape de désorption, à sa sortie de cette zone, en contact d'échange thermique avec au moins une partie de la solution (S1) provenant de l'étape d'absorption avant que ladite solution soit introduite dans la zone de rectification.

4. Procédé selon l'une quelconque des revendications 1 à 3, dans lequel on partage la solution (S1) provenant de l'étape d'absorption ·en au moins deux fractions, on envoie une première fraction audit point intermédiaire de la zone de rectification, et on met une seconde fraction en contact d'échange thermique avec le fluide de chauffage qui fournit la chaleur nécessaire à l'étape de désorption, après que ledit fluide de chauffage ait fourni ladite· chaleur à l'étape de désorption, puis on envoie ladite seconde fraction à l'étape de désorption, sans la faire passer par la zone de rectification.

5. Procédé selon l'une quelconque des revendications 1 à 4, dans lequel la phase liquide (L1) détendue est mise en contact d'échange thermique, à l'étape (a), d'abord avec de l'eau et/ou de l'air extérieurs et ensuite avec des gaz de combustion, lesdits gaz de combustion, étant ceux résultant de la combustion qui fournit la chaleur nécessaire à l'étape de désorption.

6. Procédé selon la revendication 5, dans lequel les gaz de combustion provenant de l'étape de désorption sont d'abord mis en contact d'échange thermique avec une partie au moins de la solution S1, provenant de l'étape d'absorption, avant d'être mis en contact d'échange thermique avec la phase liquide (L1) détendue.

7. Procédé selon l'une quelconque des revendications 1 à 6, dans lequel la pression est de 1 à 15 bars dans la zone d'absorption et de 3 à 25 bars dans la zone de désorption, la pression étant plus élevée dans la zone de désorption que dans la zone d'absorption.

8. Procédé selon l'une quelconque des revendications 1 à 7, dans lequel la température à l'issue des étapes de condensation et d'absorption est comprise entre 20 et 100°C.

9. Procédé selon l'une quelconque des revendications 1 à 8, dans lequel la température, au cours de l'étape de vaporisation, est comprise entre −15 et 50°C.

10. Procédé selon l'une quelconque des revendications 1 à 9, dans lequel la phase liquide (L2) de l'étape (a) est mise en contact d'échange thermique avec la phase liquide condensée (L1) de l'étape (d) avant d'être fractionnée en au moins une première et une seconde fraction.

**Patentansprüche**

1. Verfahren zur Erzeugung von Kälte und/oder Wärme entsprechend einem Absorptionszyklus unter Verwendung eines die Rolle des gelösten Stoffs spielenden Arbeitsfluids (F) und eines die Rolle des Lösungsmittels spielenden Fluids (S), wobei die Siedetemperatur des Fluids (S) höher als die Siedetemperatur des Fluids (F) liegt und dieser Zyklus wenigstens eine Absorptionsstufe, wenigstens eine Desorptionsstufe, wenigstens eine Rektifikationsstufe des aus der Desorptionsstufe kommenden Dampfs, wenigstens eine Kodensationsstufe und wenigstens eine Verdampfungsstufe umfasst, mit den folgenden Stufen:
a) teilweise verdampft man in der Verdampfungsstufe die an Fluid (F) reiche flüssige Phase (L1), die in der Kondensationsstufe erhalten wurde, indem man die notwendige Verdampfungswärme wenigstens zum Teil einem äusseren Fluid entnimmt, eine Dampfphase (V1) und eine flüssige Phase (L2) sammelt und diese Dampfphase (V1) von der flüssigen Phase (L2) trennt und die flüssige Phase (L2) in wenigstens eine erste Fraktion und wenigstens eine zweite Fraktion fraktioniert,
b) man kontaktiert in der Absorptionsstufe die Dampfphase (V1) aus der Stufe (a) mit einer flüssigen Phase (L3), die an Fluid (F) arrn und an Fluid (S) reich ist und aus der Desorptionsstufe stammt, und gibt Wärme an ein äusseres Fluid ab und sammelt eine an Fluid (F) angereicherte Lösung (S1),
c) man führt wenigstens eine Fraktion der Lösung (S1) aus der Stufe (b) an einem Punkt zwischen einer Rektifikationszone, wo die Rektifikationsstufe stattfindet, ein, lässt diese Fraktion der Lösung (S1) in diese Rektifikationszone fliessen, führt Wärme unten in der Rektifikationszone mittels eines Heizfluids zu, derart, dass die Desorptionsstufe dieser Lösung (S1) realisiert wird und eine Dampfphase (V2) sowie eine desorbierte flüssige Phase (L3) geformt wird, trägt diese flüssige Phase (L3) aus und führt sie in die Stufe (b), führt die erste Fraktion der flüssigen Phase (L2) aus der Stufe (a) an einem oberen Punkt der Rektifikationszone ein und lässt sie in die Rektifikationszone fliessen, lässt die Dampfphase (V2) in der Rektifikationszone von unten nach oben zirkulieren und trägt eine Dampfphase (V3) am Kopf der Rektifikationszone aus und
d) mischt die Dampfphase V3, die vom Kopf der Rektifikationszone ausgetragen wurde, mit der zweiten Fraktion der flüssigen, aus der Stufe (a) kommenden Phase (L2), kühlt das resultierende Gemisch durch Wärmeaustausch mit einem äusseren Fluid in der Kondensationsstufe und bildet so die kondensierte flüssige Phase (L1) und gibt diese Phase (L1) in die Stufe (a).

2. Verfahren nach Anspruch 1, dadurch gekennzeichnet, dass die Wärme während der Stufen der Kondensation, Absorption und Verdampfung im Gegenstromwärmeaustauscher ausgetauscht wird, wobei das Gemisch der Fluide (F) und (S) während der Kondensationsstufe und der Absorptionsstufe einer fallenden Temperaturentwicklung parallel zur ansteigenden Temperaturentwicklung des äusseren Fluids folgt und während der Verdampfungsstufe einer steigenden Temperaturentwicklung parallel zur abnehmenden Temperaturentwicklung des äusseren Fluids folgt.

3. Verfahren nach einem der Ansprüche 1 und 2, dadurch gekennzeichnet, dass man das die zur Desorptionsstufe notwendige Wärme liefernde Fluid am Austritt aus dieser Zone in Wärmeaustauschkontakt mit wenigstens einem Teil der Lösung (S1) aus der Desorptionsstufe strömen lässt, bevor die Lösung in die Rektifikationsstufe eingeführt wird.

4. Verfahren nach einem der Ansprüche 1 bis 3, dadurch gekennzeichnet, dass man die aus der Absorptionsstufe kommende Lösung (S1) in wenigstens zwei Fraktionen teilt, eine erste Fraktion zu dem Zwischenpunkt der Rektifikationszone führt und eine zweite Fraktion in Wärmeaustauschkontakt mit dem Heizfluid setzt, welches die zur Desorptionsstufe notwendige Wärme liefert, nachdem dieses Heizfluid die Wärme in der Desorptionsstufe geliefert hat, und dann die zweite Fraktion in die Desorptionsstufe gibt, ohne sie durch die Rektifikationszone zu führen.

5. Verfahren nach einem der Ansprüche 1 bis 4, dadurch gekennzeichnet, dass die entspannte flüssige Phase (L1) in Wärmeaustauschkontakt in der Stufe (a) zunächst mit Wasser und/oder Luft, die sich aussen befinden, und dann mit Verbrennungsgasen setzt, wobei diese Verbrennungsgase diejenigen sind, die aus der Verbrennung resultieren, welche die zur Desorptionsstufe notwendige Wärme liefert.

6. Verfahren nach Anspruch 5, dadurch gekennzeichnet, dass die aus der Desorptionsstufe kommenden Gase zunächst in Wärmeaustauschkontakt mit wenigstens einem Teil der Lösung (S1) aus der Absorptionsstufe gesetzt werden, bevor sie in Wärmeaustauschkontakt mit der entspannten flüssigen Phase (L1) gebracht werden.

7. Verfahren nach einem der Ansprüche 1 bis 6, dadurch gekennzeichnet, dass der Druck bei 1 bis 15 Bar in der Absorptionszone und bei 3 bis 25 Bar in der Desorptionszone liegt, wobei der Druck in der Desorptionszone höher als in der Absorptionszone ist.

8. Verfahren nach einem der Ansprüche 1 bis 7, dadurch gekennzeichnet, dass die Temperatur am Austritt aus den Kondensations- und Absorptionsstufen zwischen 20 und 100°C beträgt.

9. Verfahren nach einem der Ansprüche 1 bis 8, dadurch gekennzeichnet, dass die Temperatur während der Verdampfungsstufe zwischen −15 und 50°C liegt.

10. Verfahren nach einem der Ansprüche 1 bis 9, dadurch gekennzeichnet, dass die flüssige Phase (L2) der Stufe (a) in Wärmeaustauschkontakt mit der kondensierten flüssigen Phase (L1) der Stufe (d) gebracht wird, bevor sie in wenigstens eine erste und eine zweite Fraktion fraktioniert wird.

**Claims**

1. A process for cold and/or heat production, involving an absorption cycle operating with a working fluid (F) as the solute and a fluid (S) as the solvent, the boiling temperature of the fluid (S) being higher than the boiling temperature of the fluid (F), said cycle comprising at least one absorption step, at least one desorption step, at least one rectification step for the vapor withdrawn from the desorption step, at least one condensation step and at least one vaporization step, said process comprising the steps of:
a) in the vaporization step, vaporizing a portion of the liquid phase (L1) of high fluid (F) content, as obtained in the condensation step, taking the necessary vaporization heat at least partly from an external fluid, recovering a vapor phase (V1) and a liquid phase (L2), separating said vapor phase (V1) from said liquid phase (L2) and fractionating said liquid phase (L2) into at least one first fraction and at least one second fraction,
b) in the absorption step, contacting the vapor phase (V1) from the step (a) with a liquid phase (L3) of low fluid (F) content and high fluid (S) content from the desorption step, delivering heat to an external fluid and recovering a solution (S1) of increased fluid (F) content,

c) feeding at least one portion of the solution (S1) from step (b) to an intermediate point of a rectification zone where is effected the rectification step, flowing down said portion of the solution (S1) in said rectification zone, supplying heat at the bottom of said rectification zone by means of a heating fluid, so as to effect said desorption step of said solution (S1) and obtain a vapor phase (V2) and a desorbed liquid phase (L3), withdrawing said liquid phase (L3) and feeding it to step (b), introducing said first portion of the liquid phase (L2) from step (a) into said rectification zone, at the top thereof, flowing down said first portion in said rectification zone, circulating said vapor phase (V2) upwardly in said rectification zone and withdrawing a vapor phase (V3) from the top of said rectification zone, and
d) mixing said vapor phase (V3), withdrawn from the top of said rectification zone, with said second portion of the liquid phase (L2) from the step (a), cooling the resultant mixture by heat exchange with an external fluid, in the condensation step, so as to form said condensed liquid phase (L1), and feeding said phase (L1) to the step (a).

2. A process according to claim 1, wherein the heat exchange of the condensation, absorption and vaporization steps is effected couter-currently, the mixture of the fluids (F) and (S) following, in the condensation and absorption steps, a decreasing temperature evolution parallel to the increasing temperature evolution of the external fluid and, in the vaporization step, an increasing temperature evolution parallel to the decreasing temperature evolution of the external fluid.

3. A process according to any one of claims 1 and 2, wherein the heating fluid supplying heat to the desorption step is passed, at the outlet of the desorption step, in heat exchange contact with at least one portion of the solution (S1) from the absorption step, before said solution is introduced into the rectification zone.

4. A process according to any one of claims 1 to 3, wherein the solution (S1) from the absorption step is divided into at least two fractions, a first fraction of which is supplied to the said intermediate point of the rectification zone and a second fraction of which is heat exchanged with the heating fluid providing necessary heat to the desorption step, after said heating fluid has delivered said heat to the desorption step, and said second fraction is subsequently supplied to the desorption step without passing through the rectification zone.

5. A process according to any one of claims 1 to 4, wherein the expanded liquid phase (L1) is heat contacted, in step (a), first with external water and/or air and then with a combustion gas, said combustion gas resulting from the combustion supplying heat to the desorption step.

6. A process according to claim 5, wherein the combustion gas from the desorption step is heat exchanged first with at least a portion of the solution S1 from the absorption step and then with the expanded liquid phase (L1)

7. A process according to any one of claims 1 to 6, wherein the pressure is 1–15 bars in the absorption zone and 3–25 bars in the desorption zone, the pressure being higher in the desorption zone than in the absorption zone.

8. A process according to any one of claims 1 to 7, wherein the temperature at the end of the condensation and absorption steps is between 20 and 100°C.

9. A process according to any one of claims 1 to 8, wherein the temperature of the vaporization step is between −15 and 50°C.

10. A process according to any one of claims 1 to 9, wherein the liquid phase ($L_2$) of step (a) is heat exchanged with the condensed liquid phase ($L_1$) of the step (d) before fractionation into at least one first fraction and at least one second fraction.

## FIG.1

## FIG.2

FIG.3

FIG.4